# EUROPEAN PATENT APPLICATION

(11) **EP 3 575 150 A1**
(43) Date of publication of application: **04.12.2019**
(21) Application number: 19177312.6
(22) Date of filing: 29.05.2019
(51) Int. Cl.: B60R 7/04

(54) **CENTER CONSOLE STRUCTURE AND VEHICLE**

(30) Priority: 30.05.2018 JP 2018103222
(71) Applicant: Mazda Motor Corporation, Aki-gun, Hiroshima 730-8670 (JP)
(72) Inventor: KAWAI, Hiroyuki, Aki-gun,, Hiroshima 730-8670 (JP); TAGUCHI, Masanori, Aki-gun,, Hiroshima 730-8670 (JP); OKADA, Eiji, Aki-gun,, Hiroshima 730-8670 (JP); KARUBE, Junko, Aki-gun,, Hiroshima 730-8670 (JP); MATSUDA, Yamato, Aki-gun,, Hiroshima 730-8670 (JP); YANAGI, Yohichi, Aki-gun,, Hiroshima 730-8670 (JP); HIKAWA, Kazuki, Aki-gun,, Hiroshima 730-8670 (JP); NAKAMURA, Junko, Aki-gun,, Hiroshima 730-8670 (JP); MIYAMOTO, Koji, Aki-gun,, Hiroshima 730-8670 (JP); IWABUCHI, Atsuo, Aki-gun,, Hiroshima 730-8670 (JP); SODA, Hidehiko, Aki-gun,, Hiroshima 730-8670 (JP); HASHIMOTO, Ryoichi, Aki-gun,, Hiroshima 730-8670 (JP)
(74) Representative: Müller-Boré & Partner Patentanwälte PartG mbB

(57) **Abstract**

A center console structure includes an internal frame 40, made of metal, that supports a shift operation mechanism 25, and an outer sheath body 50, made of resin, that encloses the internal frame 40 and forms a dressed surface. A front side part of the internal frame 40 is slanted so that an upper member 46 is positioned forward and obliquely upward of a base part member 41 on the floor surface. A storage part 70 is formed in front of the base part member 41. In the storage part 70, a bottom part 60 extending in a vehicle front-rear direction to a position immediately below an instrument panel 14 is provided, both left and right side walls 64 of the bottom part 60 are surrounded by left and right fence parts 51a formed by extending lower parts of left and right side wall parts 51 of the outer sheath body 50 forward, a rear part is surrounded by a front lower part 51b of the outer sheath body 50, and both left and right sides above the left and right fence parts 51a are opened to and communicate with foot spaces for the driver seat 7 and the passenger seat 8.

## Description

### [Technical Field]

The present invention relates to a center console structure and a vehicle, particularly a center console structure that is erected on a floor surface between a driver seat and a passenger seat and has a shift operation mechanism on an upper surface thereof.

### [Background Art]

Generally, a transmission operation mechanism is provided on the upper surface of a center console and this transmission operation mechanism is coupled to a transmission via a link member and the like.

In recent years, the transmission operation mechanism (shift operation mechanism) described above and a parking brake have been electronically achieved. When the transmission operation mechanism and the parking brake are electronically achieved as described above, since a transmission operation and braking are performed by electronic signals instead of a conventional mechanical coupling structure using a link member and the like, the link member described above becomes unnecessary.

Accordingly, the space below the center console in which the link member described above has been conventionally disposed can be used as a storage or a design element.

By the way, patent document 1 discloses a structure that has a center console upper part and a center console lower part extending from the lower part of a vehicle interior of an instrument panel toward the rear part and has a storage space formed between the center console upper part and the center console lower part described above.

However, patent document 1 does not disclose the technical concept that expands the bottom part of the storage space toward the rear part of the vehicle.

### [Prior Art Documents]

### [Patent documents]

[Patent document 1] JP-A-2014-133503

### [Summary of the Invention]

### [Problem to be solved by the invention]

Accordingly, an object of the invention is to expand the bottom part of the storage part toward the rear part of the vehicle.

A center console structure according to the invention is erected on a floor surface between a driver seat and a passenger seat and has a shift operation mechanism on an upper surface thereof, the center console structure including an internal frame that supports the shift operation mechanism, the internal frame being made of metal; and an outer sheath body that encloses the internal frame and forms a dressed surface, the outer sheath body being made of resin. A front side part of the internal frame is slanted so that an upper member is positioned forward and obliquely upward of a base part member on or close to the floor surface. A storage part is formed in front of the base part member. In the storage part, a bottom part extending in a vehicle front-rear direction to a position below or immediately below an instrument panel is provided, both left and right sides of the bottom part are surrounded by left and right fence parts formed by extending lower parts of left and right side wall parts of the outer sheath body forward, a rear part is surrounded by a front lower part of the outer sheath body, and both left and right sides above the left and right fence parts are opened to and communicate with foot spaces for the driver seat and the passenger seat..

Since the above structure can expand the bottom part of the storage part toward the rear part of the vehicle while a shift knob at an upper end of the shift operation mechanism is appropriately disposed, the storage part can accommodate a long baggage such as a bag and improve convenience.

In addition, since both left and right sides above the storage part are opened to the foot spaces for the driver seat and the passenger seat and the opened portions of the storage part are present in a position near an occupant, the occupant can transfer a baggage such as a small article to or from the storage part at hand without outreach.

In one embodiment of the invention, the shift knob of the shift operation mechanism is disposed immediately above a position behind the storage part.

In the structure described above, the shift knob can be disposed in an appropriate position while ensuring favorable transfer of a baggage into and from the storage part.

In one embodiment of the invention, a vehicle includes a driver seat, a passenger seat, a floor surface between the driver seat and the passenger seat, and the above center console.

### [Advantage of the invention]

The invention has the effect of improving convenience by expanding the bottom part of the storage part toward the rear part of the vehicle.

### [Brief Description of the Drawings]

Fig. 1 is a plan view illustrating a center console structure according to the invention.
Fig. 2 is a perspective view illustrating the center console structure seen from oblique upper left of a vehicle.
Fig. 3 is a perspective view illustrating the center console structure seen from oblique upper right of the vehicle.
Fig. 4 is a side view illustrating the center console structure seen from the left side of the vehicle.
Fig. 5 is a side view illustrating the center console structure seen from the right side of the vehicle.
Fig. 6 is a side view illustrating a center console.
Fig. 7 is a perspective view illustrating an internal frame.
Fig. 8 is an enlarged side view illustrating a main part in Fig. 4.
Fig. 9 is an enlarged side view illustrating a main part in Fig. 5.
Fig. 10 is a cross sectional view illustrating a main part seen from arrow A-A in Fig. 1.
Fig. 11 is a cross sectional view illustrating a main part seen from arrow B-B in Fig. 4.
Fig. 12(a) is a cross sectional view illustrating a bottom part taken along line C-C in Fig. 6 and Fig. 12(b) is a cross sectional view illustrating a main part seen from arrow D-D in Fig. 6.

### [Modes for Carrying Out the Invention]

Improvement of convenience by expanion of a bottom part of a storage part toward a rear part of a vehicle is achieved by a center console structure that is erected on a floor surface between a driver seat and a passenger seat and has a shift operation mechanism on an upper surface thereof, the center console structure including an internal frame that supports the shift operation mechanism, the internal frame being made of metal; and an outer sheath body that encloses the internal frame and forms a dressed surface, the outer sheath body being made of resin, in which a front side part of the internal frame is slanted so that an upper member is positioned forward and obliquely upward of a base part member close to the floor surface, and a storage part is formed in front of the base part member in which a bottom part extending in a vehicle front-rear direction to a position immediately below an instrument panel is provided, both left and right sides of the bottom part are surrounded by left and right fence parts formed by extending lower parts of left and right side wall parts of the outer sheath body forward, a rear part is surrounded by a front lower part of the outer sheath body, both left and right sides above the left and right fence parts are opened to foot spaces for the driver seat and the passenger seat, and the foot spaces communicate with each other through the storage part.

### (Embodiment)

An embodiment of the invention will be described below with reference to the drawings.

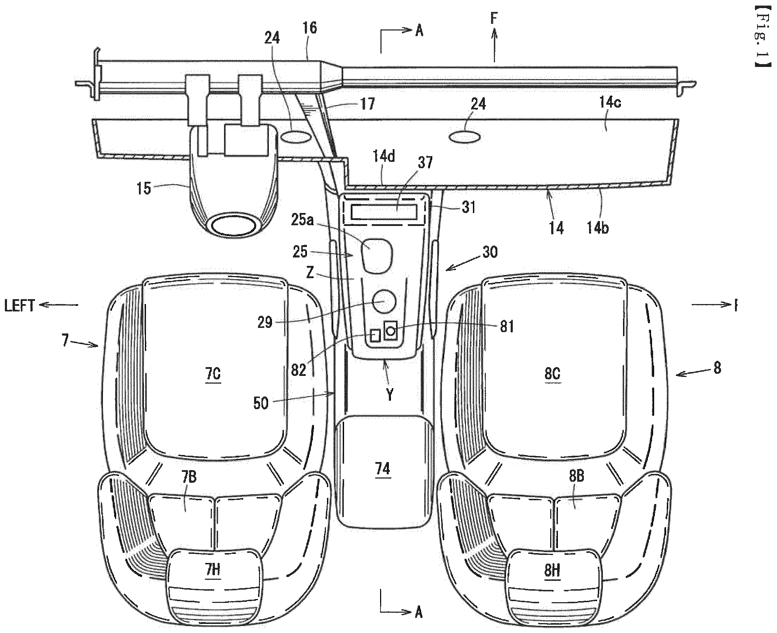

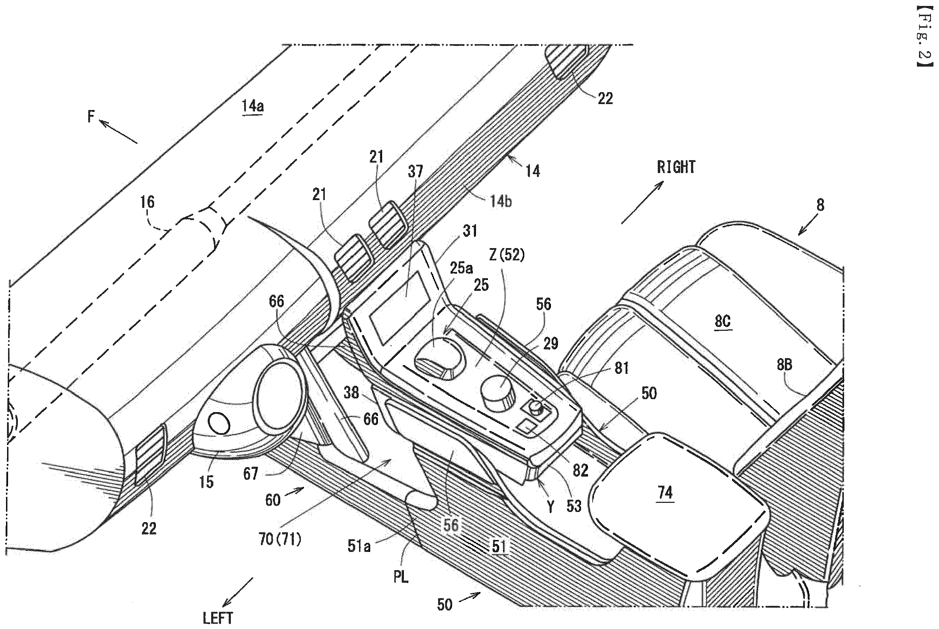

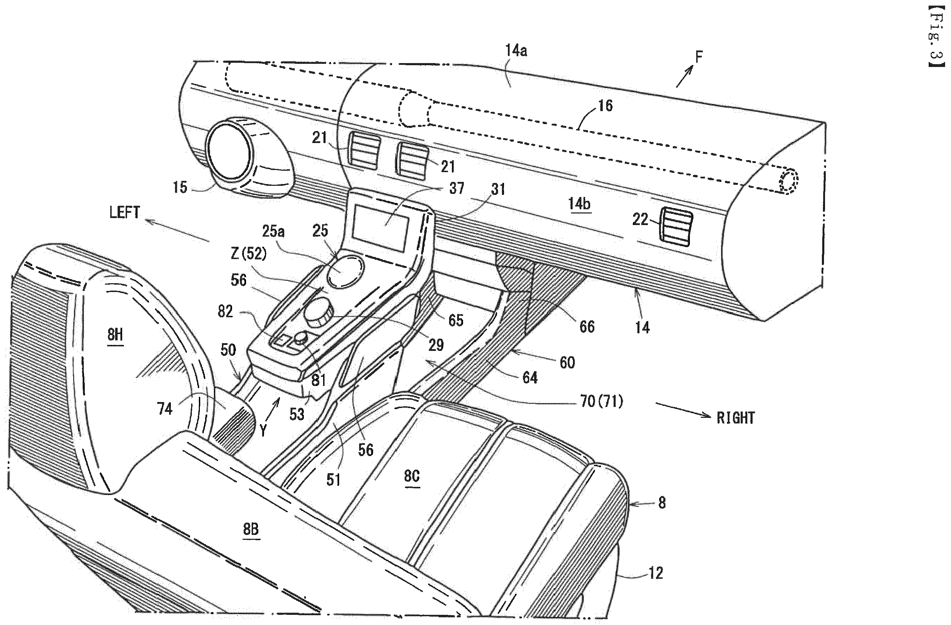

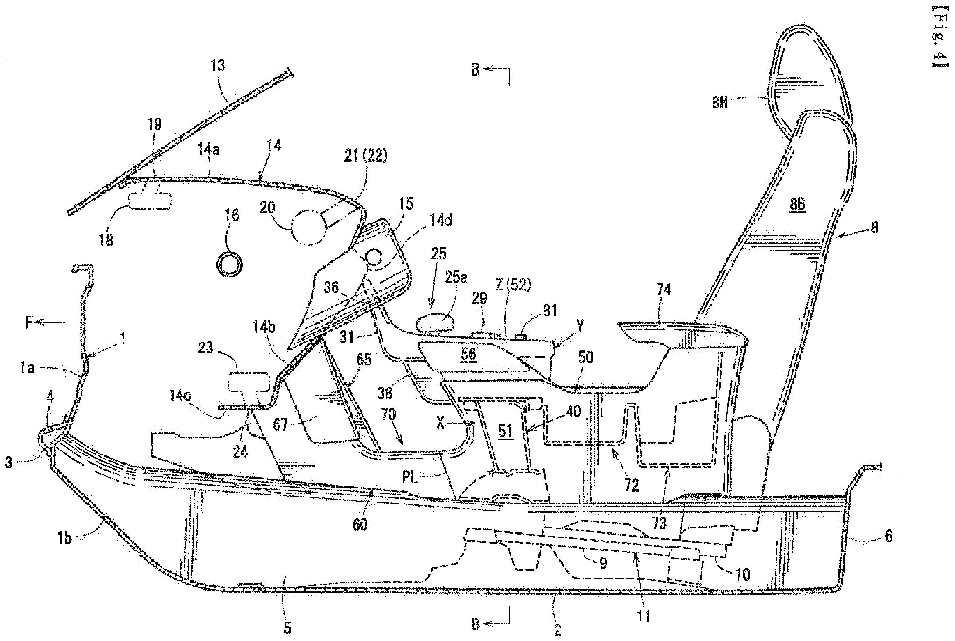

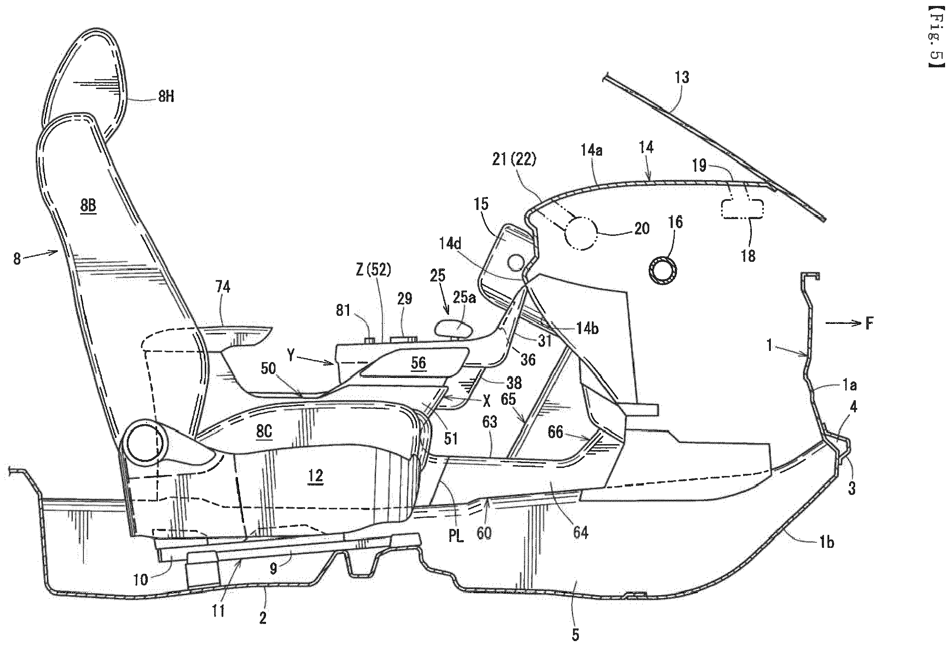

The drawings illustrate a center console structure, Fig. 1 is a plan view illustrating the center console structure, Fig. 2 is a perspective view illustrating the center console structure seen from oblique upper left of a vehicle, Fig. 3 is a perspective view illustrating the center console structure seen from oblique upper right of the vehicle, Fig. 4 is a side view illustrating the center console structure seen from the left side of the vehicle, Fig. 5 is a side view illustrating the center console structure seen from the right side of the vehicle. It should be noted here that the center console structure is applied to a left-hand drive vehicle in the embodiment.

In Fig. 4 and Fig. 5, a dash lower panel 1 (dash panel) is provided to separate the engine room of a vehicle having an internal combustion engine or the motor room of an electric vehicle from the vehicle interior in the front-rear direction of the vehicle.

This dash lower panel 1 has a vertical wall part 1a extending in an up-down direction and a slant part 1b extending downward and backward from the lower end of the vertical wall part 1a and a floor panel 2 that forms the floor surface of the vehicle interior is continuously and integrally coupled to the slant part 1b. In addition, a dash cross member 3 extending a vehicle width direction is connected and fixed to the lower front of the vertical wall part 1a described above and a dash cross closed cross section 4 extending in the vehicle width direction is formed between the vertical wall part 1a and the dash cross member 3.

A tunnel part 5 extending in the front-rear direction of the vehicle while jutting to the vehicle interior is formed integrally or approximately integrally with the floor panel 2 in the middle part in the vehicle width direction of the floor panel 2 described above. In this embodiment, the tunnel part 5 is formed so as to extend in the front-rear direction of the vehicle between the dash lower panel 1 and a kick-up part 6 in the rear part.

As illustrated in Fig. 1, a driver seat 7 and a passenger seat 8 as front seats are provided to the left and the right of the floor panel 2 described above.

The driver seat 7 includes a seat cushion 7C that forms a seating surface for an occupant, a seat back 7B that forms a backrest for the occupant, and a head rest 7H that holds the head of the occupant.

Similarly, the passenger seat 8 also includes a seat cushion 8C that forms a seating surface for an occupant, a seat back 8B that forms a backrest for the occupant, and a head rest 8H that holds the head of the occupant.

As illustrated in Fig. 4 and Fig. 5, the passenger seat 8 described above is provided via a seat slide rail 11 including a lower rail 9 and an upper rail 10 and a seat frame 12 and the position of the passenger seat 8 in the front-rear direction of the vehicle can be adjusted according to the physique of the occupant in the passenger seat.

As in the passenger seat 8, the driver seat 7 is also provided via a seat slide rail including a lower rail and an upper rail and a seat frame and the position of the driver seat 7 in the front-rear direction of the vehicle can be adjusted according to the physique of the occupant in the driver seat.

In Fig. 4 and Fig. 5, reference numeral 13 represents a front window glass and reference numeral 14 represents an instrument panel.

As illustrated in these drawings, the instrument panel 14 has an upper surface part 14a extending substantially in the front-rear direction, a rear surface part 14b extending downward and forward from the rear end of this upper surface part 14a, and a lower surface part 14c extending from the lower end of this rear surface part 14b toward the front of the vehicle and a steering column cover 15 is provided in a part of the instrument panel 14 close to the driver seat 7.

As illustrated in Fig. 1 to Fig. 5, an instrument panel member 16 as a strengthening member that extends in the vehicle width direction and couples left and right hinge pillars is provided inside the instrument panel 14 described above. In the instrument panel member 16, a part of this instrument panel member 16 close to the driver seat 7 has a larger diameter than a part of this instrument panel member 16 close to the passenger seat 8 as illustrated in Fig. 1 to prevent the occupants from offset collision. In addition, as illustrated in Fig. 1, a support stay 17 runs between the instrument panel member 16 described above and the tunnel part 5 so that this single support stay 17 supports the instrument panel member 16.

As illustrated in Fig. 4, a defroster blowout port 19 communicating with a defroster duct 18 is opened in a part of the instrument panel 14 facing a slant lower part of the front window glass 13 so as to prevent the fogging of the front window glass 13.

As illustrated in Fig. 2 and Fig. 4, a center vent blowout port 21 and a side vent blowout port 22 that communicate with a vent duct 20 are opened and formed in parts of the instrument panel 14 that face the face parts of the occupants.

As illustrated in Fig. 4, foot blowout ports 24 that communicate with a foot duct (so-called heat duct) 23 are opened and formed in parts of the instrument panel 14 that face the foot spaces for the occupants sitting in the driver seat 7 and the passenger seat 8.

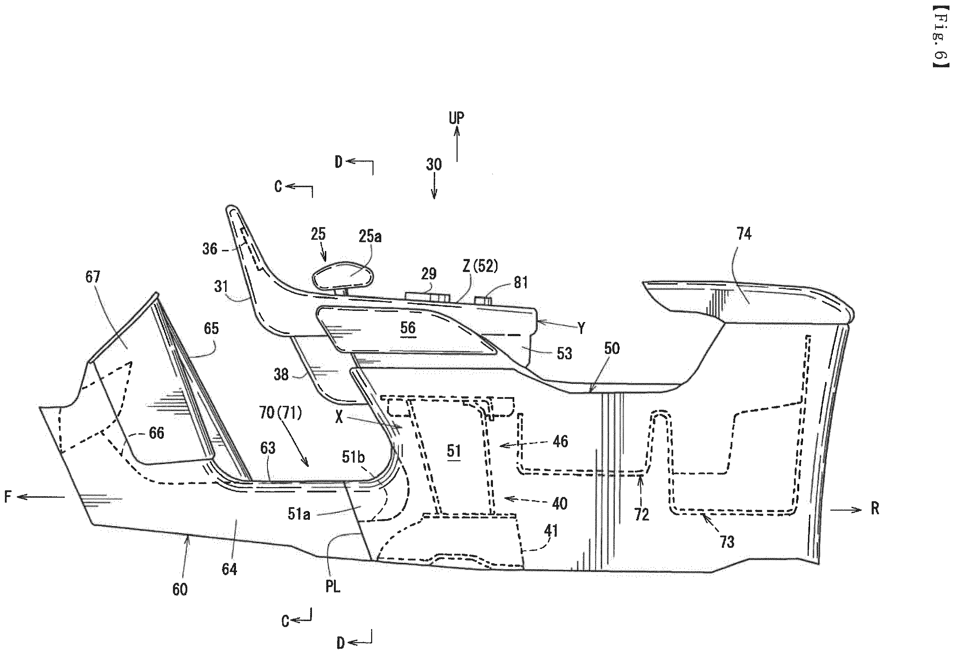

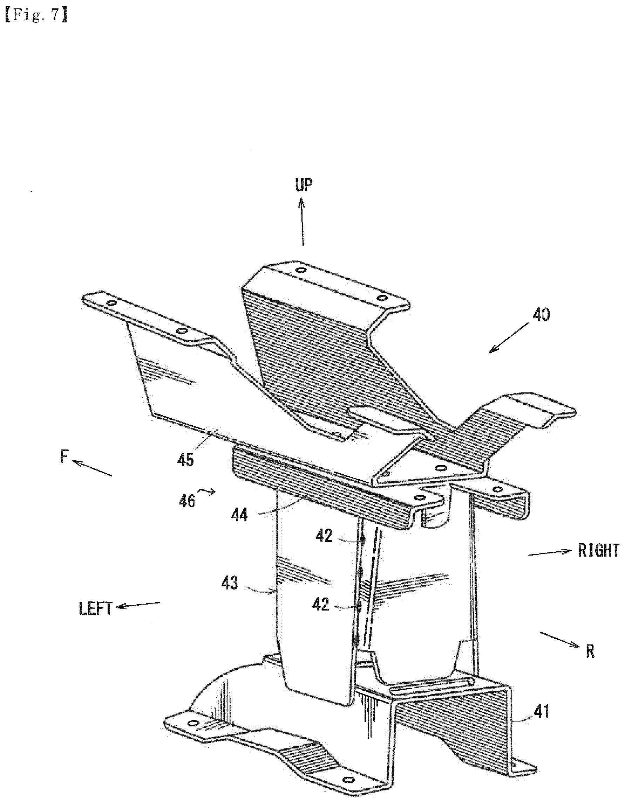

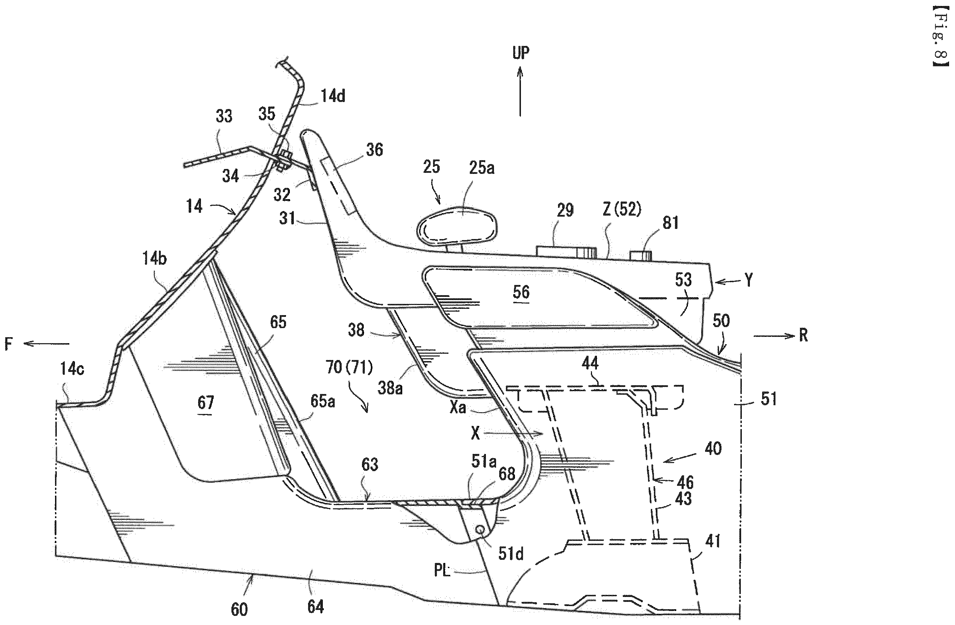

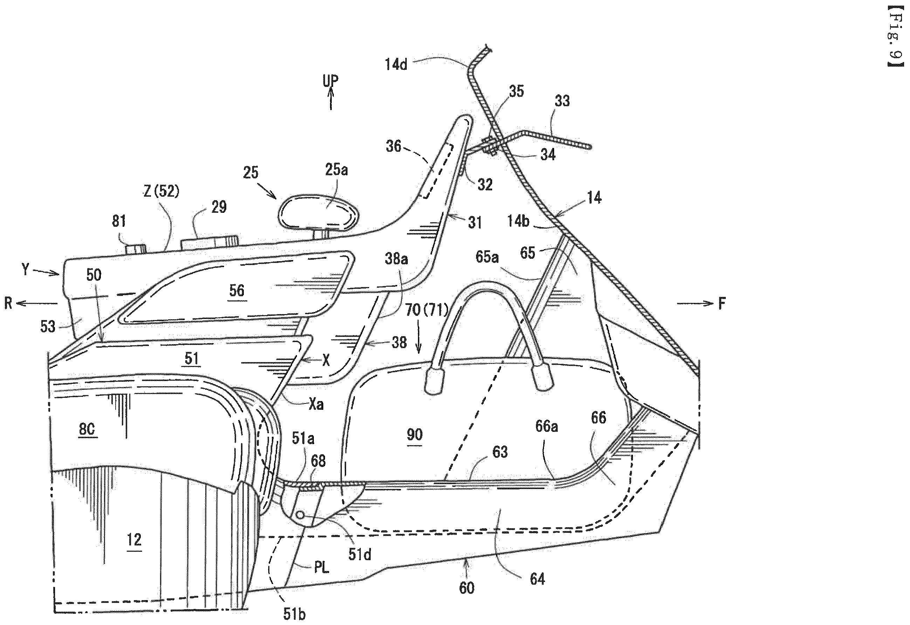

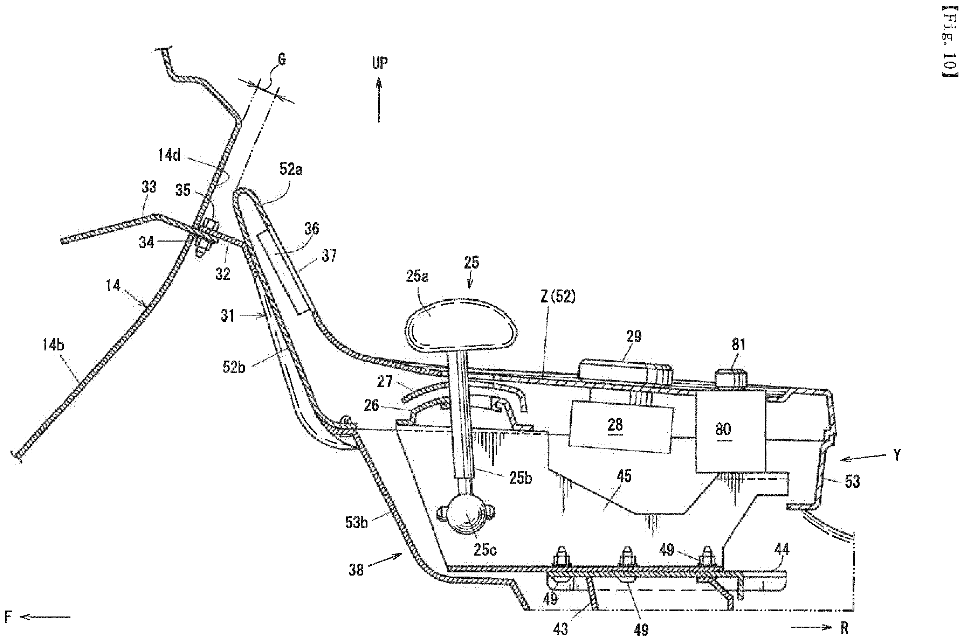

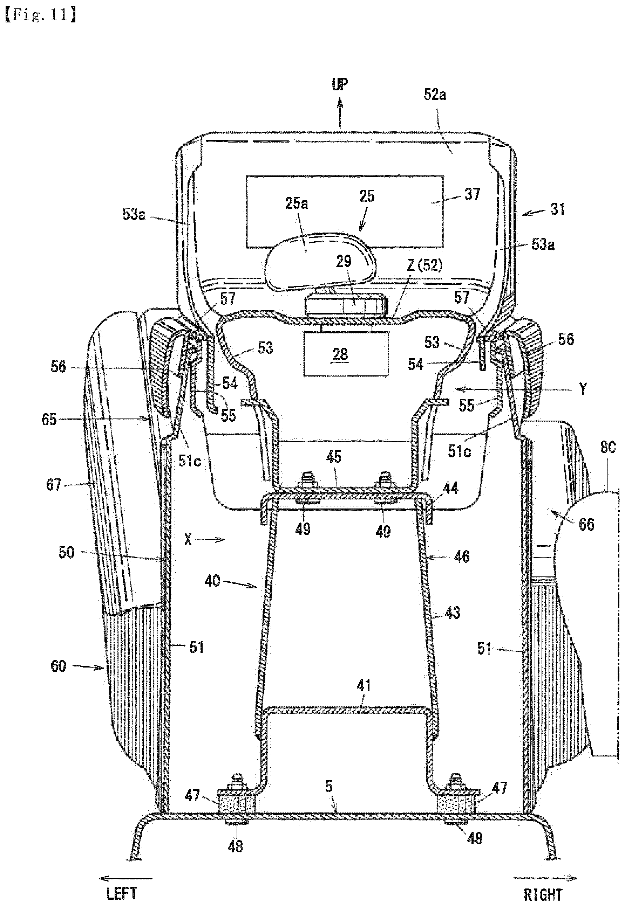

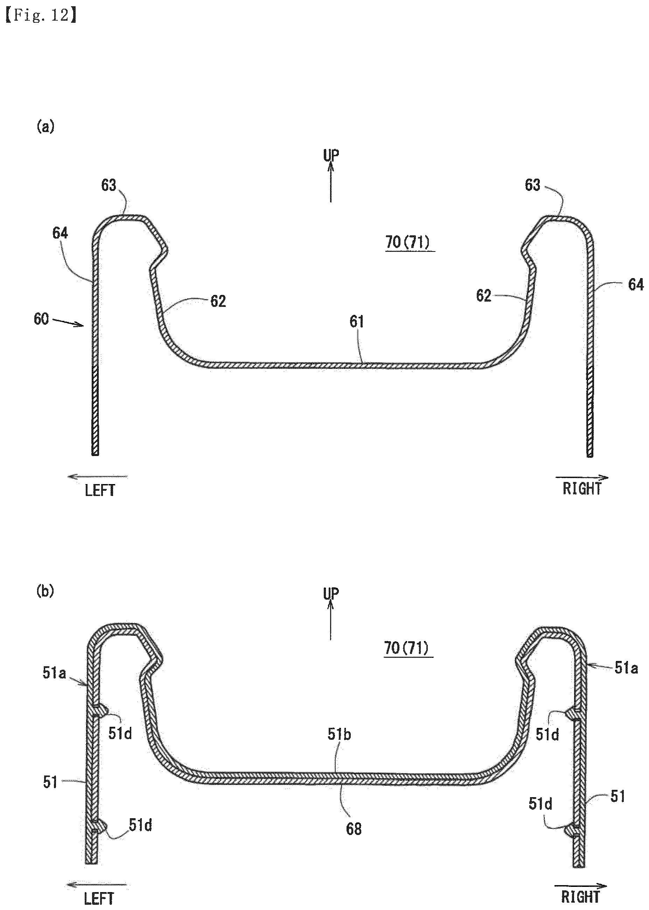

Fig. 6 is a side view illustrating a center console, Fig. 7 is a perspective view illustrating an internal frame, Fig. 8 is an enlarged side view illustrating a main part in Fig. 4, Fig. 9 is an enlarged side view illustrating a main part in Fig. 5, Fig. 10 is a cross sectional view illustrating a main part seen from arrow A-A in Fig. 1, Fig. 11 is a cross sectional view illustrating a main part seen from arrow B-B in Fig. 4, Fig. 12(a) is a cross sectional view illustrating a bottom part taken along line C-C in Fig. 6, and Fig. 12(b) is a cross sectional view illustrating a main part seen from arrow D-D in Fig. 6.

As illustrated in Fig. 1 and Fig. 6, a center console body 30 is erected on the upper surface of the tunnel part 5 as the floor surface (vehicle interior floor surface) between the driver seat 7 and the passenger seat 8, has a shift operation mechanism 25 thereon, and extends in the front-rear direction from a position immediately below the instrument panel 14 to the side parts of the seat cushions 7C and 8C of the left and right seats 7 and 8.

This center console body 30 includes an internal frame 40 (see Fig. 7), made of metal, that supports the shift operation mechanism 25, an outer sheath body 50, made of resin, that encloses the internal frame 40 and forms a dressed surface, and a bottom part console 60 as the bottom part positioned in front of a base part member (see a base part bracket 41 in Fig. 7), which will be described later, and extends in the front-rear direction of the vehicle to a position immediately below the instrument panel 14 (see Fig. 6).

As illustrated in Fig. 7, the internal frame 40 made of metal includes the base part bracket 41 as the base part member having a hat-shaped cross section in the vehicle width direction, a lower bracket 43 formed by bending a metal plate like a rectangular column and welding and fixing necessary portions at welded parts 42, a middle bracket 44 fixed to an upper part of the lower bracket 43, and an upper bracket 45 fixed to an upper part of the middle bracket 44 and having a substantially concave cross section in the vehicle width direction and an upper member 46 is formed by the elements (that is, the lower bracket 43, the middle bracket 44, and the upper bracket 45) disposed above the base part bracket 41.

As illustrated in Fig. 6 and Fig. 7, the front side part of the internal frame 40 is slanted so that the upper member 46 (particularly, the upper bracket 45) is positioned forward and obliquely upward of the base part bracket 41 close to the floor surface.

Here, as illustrated in Fig. 11, the base part bracket 41 described above is mounted and supported on the upper surface of the tunnel part 5 by mount rubbers 47 and mounting members 48 such as bolts and nuts. In addition, as illustrated in this drawing, the upper bracket 45 is fixed to the middle bracket 44 by mounting members 49 such as bolts and nuts.

As illustrated in Fig. 6 and Fig. 11, the outer sheath body 50 made of resin described above includes left and right side wall parts 51 and 51, substantially reverse U-shaped left and right fence parts 51a and 51a (see Fig. 12(b)) formed by extending the lower parts of the left and right side wall parts 51 forward, and a front lower part 51b that couples the inner end parts of the left and right fence parts 51a and 51a in the vehicle width direction.

On the other hand, the bottom part console 60 for which the cross sectional shape is illustrated in Fig. 12 (a) is formed by integrally forming a bottom wall 61, inside walls 62 that rise upward from the left and right ends of the bottom wall 61, upper walls 63 that extend outward in the vehicle width direction from the upper ends of the inside walls 62, and outside walls 64 that extend downward from the outer end parts in the vehicle width direction of the upper walls 63 using synthetic resin and the shapes of the walls 62, 63, and 64 described above correspond to the shapes of the left and right fence parts 51a and 51a of the outer sheath body 50.

In addition, as illustrated in Fig. 6, both left and right sides of the bottom part console 60 are surrounded by the left and right fence parts 51a of the outer sheath body 50 and the rear part is surrounded by the front lower part 51b of the outer sheath body 50.

In addition, as illustrated in Fig. 6, a storage part 70 is formed so that both left and right sides above the left and right fence parts 51a described above and both left and right sides above the upper walls 63 of the bottom part console 60 described above are opened to foot spaces for the driver seat 7 and the passenger seat 8 and the foot spaces communicate with each other through the storage part 70.

By the way, the center console structure in the embodiment is erected on the tunnel part 5, which is the vehicle interior floor surface between the driver seat 7 and the passenger seat 8, and has
a columnar part X that extends upward to the vicinity of the upper surfaces of the seat cushions 7C and 8C of the seats 7 and 8 and an upper body Y that is disposed above the columnar part X, extends in the front-rear direction, has the upper surface part forming a center console surface Z, and accommodates the shift operation mechanism 25 (see Fig. 6).

The columnar part X described above includes the base part bracket 41, the lower bracket 43, and the side wall parts 51, which are a lower area part of the outer sheath body 50, illustrated in Fig. 11.

In addition, the upper body Y described above includes the middle bracket 44, the upper bracket 45, and an upper area part of the outer sheath body 50 described later, illustrated in Fig. 11.

As illustrated in Fig. 6 and Fig. 8 to Fig. 10, the upper body Y described above is extended forward of the columnar part X described above like a cantilever and has, in the front part thereof, an extension part 31 that is bent and then rises forward and obliquely upward.

Although the extension part 31 is formed so as to rise at approximately 60 degrees with respect to a virtual extension line of the center console surface Z toward the front of the vehicle in the embodiment, the invention is not limited to this value.

As illustrated in Fig. 11, the upper body Y described above includes an upper panel 52 that forms the center console surface Z and side panels 53 positioned on both left and right sides of the upper panel 52. These panels 52 and 53 constitute an outer sheath body, made of resin, that forms a dressed surface.

The upper panel 52 described above extends in the front-rear direction of the vehicle to form the center console surface Z and integrally forms a slant surface 52a that is bent and then rises forward and obliquely upward from the front end to form a surface part of the extension part 31 close to the sitting occupant, so that the surface part of the extension part 31 close to the sitting occupant forms an outer surface continuous with the center console surface Z.

In addition, the side panels 53 described above extend in the front-rear direction of the vehicle to form the side walls of the center console surface Z and integrally form rising surfaces 53a that are bent and then rise forward and obliquely upward from the front ends to form the side parts of the extension part 31.

In addition, as illustrated in Fig. 10, the upper panel 52 described above integrally forms a folded surface 52b that is folded downward and backward from the upper end of the slant surface 52a to form the front surface of the extension part 31. In addition, the side panels 53 described above integrally form a front part 53b through which the front ends of the pair of left and right side panels 53 are coupled to each other in the vehicle width direction to form the front wall of the upper body Y.

As illustrated in Fig. 11, along panels 54 for ornament are provided so as to include the rising surfaces 53a of the side panels 53 along both left and right sides of the side panels 53 described above.

In addition, step sections 51c, which are the upper ends of the side wall parts 51, are disposed via middle panels 55 on the outsides in the vehicle width direction of the left and right along panels 54. The step sections 51c are formed so as to have steps on the inside in the vehicle width direction of the side wall parts 51.

In addition, ornament panels 56 of a substantially parallelogram shape are attached to the surfaces on the outsides in the vehicle width direction of the step sections 51c. In addition, as illustrated in Fig. 11, spacers 57 extending in the front-rear direction are disposed in the upper end parts of the middle panels 55 described above. The spacers 57 are formed to have gate-shaped cross sections.

On the other hand, as illustrated in Fig. 6 and Fig. 10, a shift knob 25a of the shift operation mechanism 25 is disposed immediately above the rear of the storage part 70 described above.

As illustrated in Fig. 10, the shift operation mechanism 25 includes the shift knob 25a, a shift rod 25b, and a pivot part 25c, the pivot part 25c and the shift rod 25b are accommodated in the internal space of the upper body Y, and the shift knob 25a is disposed above the center console surface Z so as to enable a shift operation. In addition, the shift rod 25b is guided by shift guides 26 and 27 supported by the upper bracket 45.

As illustrated in Fig. 2, Fig. 3, and Fig. 10, a knob part 29 of a commander 28, a knob part 81 of a volume control device 80 (so-called volume) for an in-vehicle audio apparatus or the like, and a parking brake operating part 82 are provided on the center console surface Z behind the shift knob 25a described above.

The commander 28 described above is a device that selects an application section, an Internet section, a communication section, a navigation section, or a setting section by rotating the knob part 29 thereof and determines the option by pushing the knob part 29.

As for the options of each of the sections described above, the application section has fuel economy information, various kinds of maintenance information, and the like, the Internet section has an Internet radio, a portable audio, an AM/FM radio, a CD/DVD player, and the like, the communication section has a hands-free call, reading of a short message, and the like, the navigation section has road map display, route navigation, route guidance, and the like, and the setting section has the setting of sound, the adjustment of the brightness and the angle of an active driving display, and the like.

By the way, as illustrated in Fig. 10, a portion of the extension part 31 close to the front of the vehicle is locked to a rear projecting part 14d of the instrument panel 14.

Specifically, as illustrated in this drawing, an upper bracket 32 as a first engagement part is provided on the folded surface 52b of the upper panel 52 as a vehicle front portion of the extension part 31, a lower bracket 33 as a second engagement part to be engaged with the upper bracket 32 is provided in the rear projecting part 14d of the instrument panel 14, a nut 34 is connected to the lower surface of the lower bracket 33 in advance, and a space G through which the brackets 32 and 33 are accessed from above is provided between the upward front edge part of the extension part 31 and the rear projecting part 14d of the instrument panel 14.

In addition, the extension part 31 is disposed close to the rear projecting part 14d of the instrument panel 14 so that the upper bracket 32 close to the extension part 31 is placed on the lower bracket 33 close to the instrument panel 14, a bolt 35 is moved downward through the space G described above to tighten the bolt 35 into the nut 34 described above, the portion of the extension part 31 close to the vehicle front is thereby locked to the rear projecting part 14d of the instrument panel 14 via the brackets 32 and 33.

In addition, as illustrated in Fig. 10, the extension part 31 accommodates a display device 36 for an air conditioner as an example of the display device for displaying vehicle-related information and a display surface 37 of the display device 36 is disposed in the side surface part (see the slant surface 52a) of the sitting occupant.

In the embodiment, the display device 36 including the display surface 37 described above is configured by a touch panel type display device and the display device 36 is configured so that the sitting occupant can see the entire display surface 37 even when the shift knob 25a is shifted to the most front position (parking position) as illustrated in Fig. 10.

As illustrated in Fig. 8 and Fig. 9, a storage space 71 is formed between the upper body Y including the center console surface Z and the tunnel part 5 as the floor surface and the upper part of the storage space 71 is separated by the upper body Y, the lower part thereof is separated by the bottom wall 61 (see Fig. 12(a)) and the front lower part 51b (see Fig. 12(b)) as the floor surfaces, the rear part thereof is separated by the columnar part X described above, and both left and right sides thereof are separated by the side walls 62 and 64 that are wall parts lower than the upper surfaces of the seat cushions 7C and 8C.

As illustrated in Fig. 10, the upper body Y described above projects forward of the columnar part X until the upper body Y reaches the rear projecting part 14d of the instrument panel 14, a bulge part 38 that accommodates the shift rod 25b and the pivot part 25c, which are lower parts of the shift operation mechanism 25, is formed on the side of the lower surface of the middle in the vehicle width direction of the upper body Y, and, as illustrated in Fig. 8 and Fig. 9, a front edge 38a of the bulge part 38 described above is positioned closer to the front of the vehicle than a front edge Xa of the columnar part X that is the rear edge of the input or output a right and left side take in/out opening of the storage space 71 described above in side view of the vehicle.

In Fig. 8 and Fig. 9, slanted walls 65 and 66, which are left and right wall parts extending forward and obliquely upward, are formed integrally with the side walls 62 and 64 of the bottom part console 60. On the left side of the vehicle, as illustrated in Fig. 8, the rear end part of the slanted wall 65 is a front edge 65a of the storage space 71. On the right side of the vehicle, as illustrated in Fig. 9, the rear end part of the slanted wall 66 is a front edge 66a of the storage space 71.

Accordingly, in the embodiment, the front edge Xa of the columnar part X, the front edge 38a of the bulge part 38, and the front edges 65a and 66a of the left and right wall parts of the storage space 71 are formed as shapes that are slanted upward toward the front and have the same slanted angle. It should be noted here that reference numeral 67 represents a kneepad member in Fig. 8.

In addition, as illustrated in Fig. 8 and Fig. 9, the lower front side of the columnar part X and the wall parts (that is, the inside walls 62, the upper walls 63, the outside walls 64) of the bottom part console 60 are the outer sheath body and formed so that the left and right outer surfaces are flush with each other.

Specifically, the inside walls 62, the upper walls 63, and the outside walls 64 described above are the outer sheath body and, as illustrated in Fig. 12, formed so that the front lower part 51b of the columnar part X is flush with the bottom wall 61 of the bottom part console 60 and the fence parts 51a of the columnar part X are flush with the walls 62, 63, and 64 of the bottom part console 60.

Here, the fence parts 51a and the front lower part 51b described above are formed integrally with the side wall parts 51 included in the outer sheath body 50.

In addition, as illustrated in Fig. 8 and Fig. 9, a parting line PL that divides the outer sheath body into the front and rear parts in the wall parts (see the elements 61, 62, 63, 64, 51a, and 51b) is provided.

In the embodiment, as illustrated in Fig. 8 and Fig. 9, in the rear end part of the bottom part console 60, a stepped-down part 68 corresponding to the thickness of the fence parts 51a and the front lower part 51b described above is integrally formed and the fence parts 51a and the front lower part 51b described above are disposed on this stepped-down part 68 to ensure the flush structure of the outer sheath body.

In addition, as illustrated in Fig. 12(b), on the outer side parts of the fence parts 51a of the side wall part 51 close to the columnar part X, a plurality of clips 51d projecting inward is formed integrally and the outside parts of the fence parts 51a are fitted to the outside walls 64 close to the bottom part console 60 illustrated in Fig. 12 by the clips 51d.

On the other hand, as illustrated in Fig. 6, a front side cup holder 72 as a second storage space is provided behind the columnar part X described above, a rear side cup holder 73 as a third storage space is provided behind the front side cup holder 72, and an arm rest part 74 also functioning as an open/close lid for the rear side cup holder 73 is provided above the rear side cup holder 73.

In Fig. 9, reference numeral 90 represents a bag as an example of a baggage placed so as to be easily transferred to or from the storage part 70. In addition, arrow F in the drawing represents the front side of the vehicle, arrow R represents the rear side of the vehicle, and arrow LEFT represents the left side of the vehicle width direction, arrow RIGHT represents the right side of the vehicle width direction, and arrow UP represents the upper side of the vehicle.

As described above, the center console structure according to the embodiment is the center console structure that is erected on the floor surface (see the tunnel part 5) between the driver seat 7 and the passenger seat 8 and has the shift operation mechanism 25 on an upper surface thereof. The center console structure includes the internal frame 40, made of metal, that supports the shift operation mechanism 25 and the outer sheath body 50, made of resin, that encloses the internal frame 40 and forms a dressed surface. The front side part of the internal frame 40 is slanted so that the upper member 46 is positioned forward and obliquely upward of the base part member (see the base part bracket 41) on or close to the floor surface. The storage part 70 is formed in front of the base part member (the base part bracket 41). In the storage part 70, the bottom part (see the bottom part console 60) extending in the vehicle front-rear direction to a position below or immediately below the instrument panel 14 is provided, both left and right sides of the bottom part (the bottom part console 60) are surrounded by the left and right fence parts 51a formed by extending lower parts of the left and right side wall parts 51 of the outer sheath body 50 forward, the rear part is surrounded by the front lower part 51b of the outer sheath body 50, and both left and right sides above the left and right fence parts 51a are opened to and communicate with foot spaces for the driver seat 7 and the passenger seat 8 (see Fig. 1, Fig. 7, Fig. 8, Fig. 9, and Fig. 12).

Since the bottom part of the storage part 70 can be extended toward the rear part of the vehicle while the shift knob 25a at the upper end of the shift operation mechanism 25 is disposed at an appropriate position in this structure, a long baggage such as the bag 90 (see Fig. 9) can be accommodated and convenience can be improved.

In addition, since both left and right sides above the storage part 70 are opened to the foot spaces for the driver seat 7 and the passenger seat 8 and the opened portions of the storage part 70 are present near the occupant, the occupant can transfer a baggage such as a small article to or from the storage part 70 at hand without outreach.

In one embodiment of the invention, the shift knob 25a of the shift operation mechanism 25 is disposed immediately above a position behind the storage part 70 (see Fig. 8 and Fig. 9).

In this structure, the shift knob 25a can be positioned in an appropriate position while favorable transfer of a baggage to and from the storage part 70 is ensured.

In correspondence between the invention and the embodiment described above, the floor surface between the driver seat and the passenger seat in the invention corresponds to the tunnel part 5 in the embodiment. Similarly, the base part member corresponds to the base part bracket 41 and the bottom part extending in the vehicle front-rear direction to a position immediately below the instrument panel corresponds to the bottom part console 60, but the invention not limited to only the structure of the embodiment described above.

For example, although the center console structure is applied to a left-hand drive vehicle in the embodiment described above, the center console structure according to the invention may be applied to a right-hand drive vehicle.

### [Industrial Applicability]

As described above, the invention is useful for a center console structure that is erected on a wall surface between a driver seat and a passenger seat and has a shift operation mechanism on an upper surface thereof.

### [Description of Reference Signs and Numerals]

- 5:: tunnel part (floor surface)
- 7:: driver seat
- 8:: passenger seat
- 25:: shift operation mechanism
- 25a:: shift knob
- 40:: internal frame
- 41:: base part bracket (base part member)
- 46:: upper member
- 50:: outer sheath body
- 51:: side wall part
- 51a:: fence part
- 51b:: front lower part
- 60:: bottom part console (bottom part)
- 70:: storage part

## Claims

1. A center console structure that is to be erected on a floor surface (2) between a driver seat (7) and a passenger seat (8) and has a shift operation mechanism (25) on an upper surface thereof, the center console structure comprising:
an internal frame (40) configured to support the shift operation mechanism (25), the internal frame (40) being made of metal; and
an outer sheath body (50) configured to enclose the internal frame (40) and form a dressed surface, the outer sheath body (50) being made of resin,
wherein
a front side part of the internal frame (40) is slanted so that an upper member (46) is positioned forward and obliquely upward of a base part member (41) on the floor surface (2),
a storage part (70) is formed in front of the base part member (41), and
in the storage part (70),
a bottom part (60) extending in a vehicle front-rear direction to a position below an instrument panel (14) is provided,
both left and right sides (64) of the bottom part (60) are surrounded by left and right fence parts (51a) formed by extending lower parts of left and right side wall parts (51) of the outer sheath body (50) forward,
a rear part is surrounded by a front lower part (51b) of the outer sheath body (50), and
left and right sides above the left and right fence parts (51a) are opened to and communicate with foot spaces for the driver seat (7) and the passenger seat (8) .

2. The center console structure according to claim 1,
wherein a shift knob (25a) of the shift operation mechanism (25) is disposed above a position behind the storage part (70).

3. A vehicle comprising:
a driver seat (7);
a passenger (8) seat;
a floor surface (2) between the driver seat (7) and the passenger seat (8); and
a center console according to claim 1 or 2.
